Europäisches Patentamt

European Patent Office

Office européen des brevets

(11) Publication number: **0 258 907 B1**

# EUROPEAN PATENT SPECIFICATION

(45) Date of publication of patent specification: **24.04.91**   (51) Int. Cl.⁵: **C10G 9/20, C01B 3/38**

(21) Application number: **87112987.0**

(22) Date of filing: **04.09.87**

(54) **Reactor tube for thermally cracking of reforming hydrocarbons.**

(30) Priority: **05.09.86 JP 210370/86**

(43) Date of publication of application:
**09.03.88 Bulletin 88/10**

(45) Publication of the grant of the patent:
**24.04.91 Bulletin 91/17**

(84) Designated Contracting States:
**DE FR GB**

(56) References cited:
**GB-A- 382 355**
**GB-A- 2 066 696**
**US-A- 4 444 732**
**US-A- 4 529 669**

(73) Proprietor: **KUBOTA CORPORATION**
**2-47, Shikitsuhigashi 1-chome**
**Naniwa-ku, Osaka(JP)**

Proprietor: **TOYO ENGINEERING CORPORA-TION**
**2-5, Kasumigaseki 3-chome**
**Chiyoda-ku, Tokyo 100(JP)**

(72) Inventor: **Sugitani, Junichi**
**36-10, Nagaohigashimachi 2-chome**
**Hirakata-shi Osaka(JP)**
Inventor: **Tsuchida, Koji**
**1877-18, Tanoguchi**
**Hirakata-shi Osaka(JP)**
Inventor: **Shinohara, Takanobu**
**10-8, Omiyadai 3-chome**
**Chiba-shi Chiba(JP)**
Inventor: **Shibata, Keiichi**
**37-1, Hagiharacho 3-chome**
**Mobara-shi Chiba(JP)**

(74) Representative: **TER MEER - MÜLLER - STEIN-MEISTER & PARTNER**
**Mauerkircherstrasse 45**
**W-8000 München 80(DE)**

## Description

### FIELD OF THE INVENTION

The present invention relates to a reactor tube for use in thermally cracking or reforming hydrocarbons, and more particularly to a reactor tube for conducting such a chemical reaction of hydrocarbons so that the deposition of solid carbon on the surface of the tube can be inhibited and the carburization into the tube can be prevented.

### BACKGROUND OF THE INVENTION

Reactors for thermally cracking or reforming hydrocarbons are tubular and are used for such a reaction by passing a liquor gaseous hydrocarbon therethrough at an elevated temperature and high pressure in the presence or absence of a catalyst layer. The tube constituting such reactors is made of heat-resistant austenitic FE-CR-Ni steel containing large amounts of Ni and Cr and heretofore generally used for apparatus for use at elevated temperatures. The higher the temperature at which the reactor tube is operated, the higher is the Ni content of the material used to give enhanced heat resistance.

The thermal cracking or reforming reaction of hydrocarbons involves separation of solid carbon, so that when the reaction is continued using a reactor tube of Fe-Cr-Ni steel, solid carbon is inevitably deposited on the wall surface of the reactor tube in contact with the hydrocarbon (i.e. the inner surface and/or outer surface of the tube wall depending on how the tube is used). Such deposition phenomenon of solid carbon is generally called as "coking".

Solid carbon, if allowed to separate out for deposition, not only impedes the flow of hydrocarbon-containing fluid through the tube but also results in a greatly lowered overall coefficient of heat transfer when reaction heat is supplied to or removed from the tube to carry out the reaction, consequently making it difficult to continue the operation of the reactor. The reactor which should normally be operated continuously for a long period of time must therefore be brought out of operation temporarily to periodically remove the deposited carbon by some method. Such a work is generally called as "decoking".

To overcome the coking phenomenon onto the tube, the reactor tube made of material having restricted amount of Ni was proposed in U.S. Patent No. 4,444,732. There is disclosed in this patent that the marked deposition of solid carbon on the conventional reactor tube of heat-resistant Fe-Cr-Ni steel is attributable to the Ni contained in the tube material and acting as a catalyst for promoting deposition of carbon from the hydrocarbon which is in contact with the Ni at the surface of the tube, that there is a definite correlation between the amount of solid carbon deposit and the Ni content of the tube material. However, this patent is only to negatively inhibit the coking by limiting the amount of Ni which promotes to deposit the solid carbon.

Further the reactor tube of the U.S. Patent has the problem that carburization of the tube cannot be effectively inhibited. Carburization of the tube proceeding from the tube wall surface inward deteriorates the material of the tube, especially markedly impairing the ductility thereof, to entail an increased likelihood of cracking due to brittleness when the tube is used under a high pressure.

Since the reactor tube is recently operated under the severer conditions, it has been required to provide the reactor tube by which the coking and carburization are effectively prevented.

The present invention is to improve the reactor tube disclosed in the U.S. Patent No. 4,444,732 and is to provide a reactor tube incorporated therein suitable quantities of Mn and Al into the steel material forming the tube. The use of the reactor tube of the present invention has such advantages that the deposition on the tube surface to be brought into contact with hydrocarbons can be positively reduced to the greatest possible extent and further the carburization of the tube proceeding fromits wall surface can be effectively inhibited whereby the deterioration of the tube material can be prevented.

### SUMMARY OF THE INVENTION

The percentages as used hereinafter for expressing the contents of steel components are all by weight.

An object of the present invention is to provide a reactor tube for thermally cracking or reforming a hydrocarbon which comprises a reaction wall layer to be brought into contact with the hydrocarbon and a covering layer covering the reaction wall layer and fused thereto at the interface therebetween, the reaction wall layer being formed of a heat-resistant Fe-Cr-Mn-Al steel substantially free from Ni and comprising 0.3 to 1.5% of C, above 0 to up to 3.0% of Si, 6.0 to 15.0% of Mn, 13.0 to 30.0% of Cr, 0.1 to 2.0% of Al, above 0 to up to 0.15% of N and the balance Fe, or Fe partially replaced by above 0 to up to 1.0% of Nb, the covering layer being formed of a heat-resistant austenitic Fe-CR-Ni steel comprising 0.01 to 0 6% of C, above 0 to up to 2.5% of Si, above 0 to up to 2.0% of Mn, 20.0 to 30.0% of Cr, 18.0 to 40.0% of Ni, above 0 to up to 0.15% of N and the balance Fe, or Fe partialy replaced by up to 5.0% of at least one element selected from among Mo, W and Nb, whereby the reaction can be carried out without permitting deposition of solid carbon, with carburization of the tube from its surface inhibited.

Another object of the invention is to provide a reactor tube for thermally cracking or reforming a hydrocarbon of the type described above wherein the reaction wall layer is made of a heat-resistant Fe-Cr-Mn-Al-Ni steel corresponding to the above-heat-resistant Fe-Cr-Mn-Al steel wherein the Fe is partially replaced by up to 10.0% of Ni, whereby the reaction can be conducted similarly without deposition of solid carbon, with carburization of the tube surface also inhibited.

The reactor tube of the present invention has a double-layer structure made of the above compositions or, when desired, a triple-layer structure, is thereby given satisfactory characteristics, such as high-temperature strength and oxidation resistance, required for use at high temperatures and high pressures, and can be used for a long-term operation with high stability without permitting the reaction to deposit solid carbon to the greatest possible extent to obviate the need for decoking.


BRIEF DESCRIPTION OF THE DRAWINGS

Fig. 1 is a front view partly broken away and showing a reactor tube embodying the invention;
Fig. 2 is a view in section taken along the line II-II in Fig. 1;
Figs. 3 and 4 are views in cross section of other tubes embodying the invention;
Fig. 5 is a graph showing amounts of solid carbon deposited on wall surfaces of reactor tubes; and
Fig. 6s is a graph showing increases in the amount of carbon due to carburization of such reactor tubes.


DESCRIPTION OF THE PREFERRED EMBODIMENTS

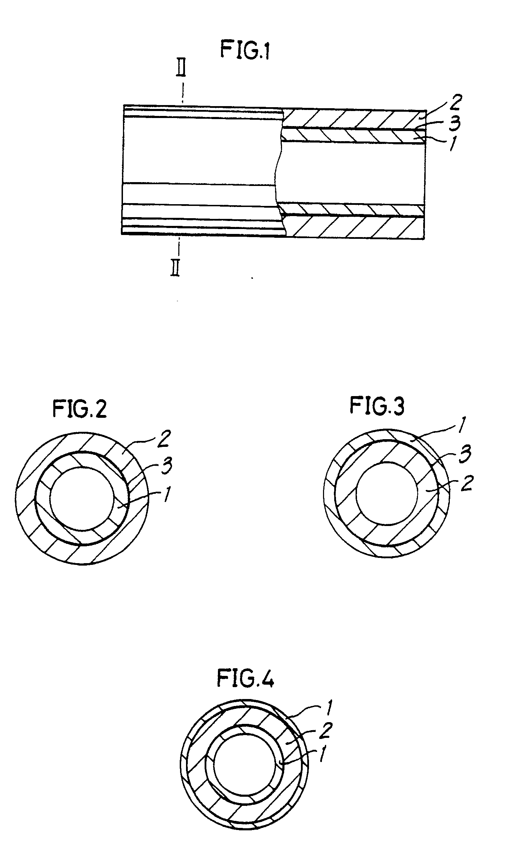

When the reactor tube of the invention is to be brought into contact with hydrocarbons over its inner surface to provide a reaction zone, the reactor tube has on its inner side a reaction wall layer 1 as seen in Figs. 1 and 2. The reaction wall layer 1 is prepared from a heat-resistant Fe-Cr-Mn-Al steel free from Ni, or from a heat-resistant Fe-Cr-Mn-Al-Ni steel containing up to about 10% of Ni.

The reaction wall layer 1 is externally covered with a covering layer 2 made of a heat-resistant austenitic Fe-Cr-Ni steel which is fused to the layer 1 at the interface 3 therebetween. Thus, the reactor tube has a double-wall structure.

When the reactor tube is to be brought into contact with hydrocarbons over its outer surface to provide a reaction zone, the reactor tube is conversely formed on its outer side with a reaction wall layer 1 of the same compposition as above, and the layer 1 is internally covered with a covering layer 2 made of the same composition as above, as seen in Fig. 3.

Further when the reaction tube provides a reaction zone over both the inner and outer surfaces thereof, the reaction wall layers 1, 1 can of course be formed on both the inner and outer sides of the tube, with a covering layer 2 formed between the two reaction wall layers 1, 1, as shown in Fig. 4.


The Reaction Wall Layer

Stated more specifically, the heat-resistant Fe-Cr-Mn-Al steel forming the reaction wall layer comprises 0.3 to 1.5% of C, above 0 to not more than 3.0% of Si, 6.0 to 15.0% of Mn, 13.0 to 30.0% of Cr, 0,1 to 2.0% of Al, above 0 to not more than 0.15% of N, and the balance substantially Fe, or Fe partially replaced by above 0 to not more than 1.0% of Nb.

The heat-resistant Fe-Cr-Mn-Al-Ni steel forming the reaction wall layer comprises 0.3 to 1.5% of C, above 0 to not more than 3.0% of Si, 6.0 to 15.0% of Mn, 13.0 to 30.0% of Cr, 0.1 to 2.0% of Al, above 0 to not more than 0.15% of N, up to 10.0% of Ni, and the balance substantially Fe, or Fe partially replaced by above 0 to not more than 1.0% of Nb.

The heat-resistant Fe-Cr-Mn-Al or Fe-Cr-Mn-Al-Ni Steel of the invention forming the reaction wall layer is limited as above with respect to its components for the following reasons.

The following description will be given with reference to the embodiment of Fig. 1 wherein the reaction wall layer 1 is provided on the inner side of the tube, and the covering layer 2 on the outer side thereof. C: 0.3 to 1.5%

As the C content of the inner alloy layer to be contacted with hydrocarbons increases, the amount of carbon deposition on the surface of the layer tends to increase. Further when the reactor tube is used at high temperatures, carbon diffuses and migrates from the inner alloy layer into the outer alloy layer of lower carbon content, thereby deteriorating the alloy of the outer layer. To preclude these objections, the upper limit of the C content is 1.5%. On the other hand, when the C content is less than 0.3%, sigma phase separates out during use at high temperatures to result in seriously impaired ductility. Further the lower the C content, the higher will be the melting point of the alloy, so that when an inner layer alloy of lower C content is used for preparing the reactor tube of double-layer structure by centrifugal casting as will be described below, the melt of this alloy immediately solidifies on casting to result in improper fusion at the interface between the inner layer and the outer layer. Thus, difficulty is encountered in casting a faultless reactor tube of double-layer structure. For this reason, the lower limit of the C content should be 0.3%. Si: over 0 to not more than 3.0%

Si serves as a deoxidizer when the steel is melted and is also effective for affording improved resistance to carburization. However, an excess of Si present entails impaired weldability, so that the Si content should be up to 3.0%.
Mn: 6.0 to 15.0%

Mn is effective for inhibiting carburization of the tube which proceeds from the surface thereof in contact with hydrocarbons. To assure this effect, at least 6.0% of Mn should be present. This effect increases with increasing Mn content. However, if the Mn content exceeds 15.0%, the tube is prone to cracking during casting owing to impaired ductility. The upper limit of Mn content is therefore 15.0%.
Cr: 13.0 to 30.0%

Cr affords increased strength at high temperatures and enhanced resistance to oxidation. To ensure strength and oxidation resistant during use especially at high temperatures of at least 1300°C, the Cr content should be at least 13.0% according to the invention. Although this effect increases with increasing Cr content, presence of more than 30.0% of Cr causes the alloy to exhibit greatly lowered ductility after use at high temperatures, so that the upper limit is 30.0%. Al: 0.1 to 2.0%

Al is effective for inhibiting the coking and giving increased resistance to carburization, as previously described. To obtain this effect, at least 0.1% of Al must be present. While the resistance to carburization increases with increasing Al content, the Al content, if exceeding 2.0%, renders the reactor tube susceptible to cracking during casting owing to lowered ductility, so that the upper limit to the Al content should be 2.0%.

With respect to the adverse effect of Al, the higher the Al content, the lower will be the ductility of the material. Although the amount of Al of up to 2.0% does not provide any substantial problem in practical use, the amount of Al is preferably less than 1.0% because if its content is at least 1.0% the material will be affected by the Al. On the other hand, in view of the advantageous effect on the inhibition of coking and the prevention of carburization, the amount of Al is preferably more than 0.5%. Therefore, the Al content is preferable to be at least 0.1% to less than 1.0% and more preferable to be more than 0.5% to less than 1.0%. N: over 0 to not more than 0.15%

N strengthens theaustenitie phase in the form of a solid solution. N further forms nitrides which diffusedly precipitates, acting to form finer crystals and thereby affording increased strength and enhanced resistance to thermal shock. When present in a large amount, however, N permits an excess of nitrides to separate out, conversely resulting in lower resistance to thermal shock. Accordingly, the N content should be up to 0.15%.
Nb: over 0 to not more thans 1.0%

Nb is an element which is effective for affording improved resistance to carburization. When desired, up to 1.0%, preferably 0.3 to 1.0%, of Nb is incorporated into the material. The upper limit is 1.0%, since higher Nb contents will entail lower ductility.
Ni: up to 10.0%

When the Fe of the heat-resistant Fe-Cr-Mn-Al steel is partially replaced by up to 10.0% of Ni, the steel can be improved in resistance to oxidation and in strength.

The Ni content should be up to 10.0% since when the content exceeds this upper limit, the activity of Ni as a catalyst for accelerating separating-out of solid carbon becomes no longer negligible. As in the case of the Ni-free Fe-Cr-Mn-Al steel, the Fe in this Fe-Cr-Mn-Al-Ni steel can be partially replaced by up to 1,0% of Nb when so desired.

### The Covering Layer

The covering layer 2 covering the reaction wall layer 1 can be prepared from heat-resistant austentic Fe-Cr-Ni steels which are generally used as material for tubes for the same use as the present tube. An example of such steel is one comprising 0.01 to 0.6% of C, over 0 to not more than 2.5% of Si, over 0 to not more than 2.0% of Mn, 20.0 to 30.0% of Cr, 18.0 to 40.0% of Ni, over 0 to not more than 0.15% of N, and the balance substantially Fe. This steel has heretofore been used as a material for reactor tubes and is excellent in strength, oxidation resistance, creep strength, etc. for use at high temperatures.

Also desirable as an alloy for forming the covering layer is a heat-resistant steel having the same composition as the above Fe-Cr-Ni steel except that the Fe in the latter is partially replaced by at least one element selected from the group consisting of Mo, W and Nb. These elements are used in a combined amount of up to 5.0% as will be described below.

Nb, which gives improved weldability, forms Nb carbide as finely dispersed in the austenitic phase to strengthen this matrix, affording greatly enhanced creep strength, forming a fine structure on casting and giving improved weldability. However, an excess of Nb conversely results in lowered creep rupture strength and reduced ductility, so that the Nb content should be up to 5.0%. Since Nb is usually present conjointly with Ta, the combined amount of these elements should be up to 5.0% in this case.

Mo and W, like Nb, form carbides to strengthen the austenitic phase. The Mo and W contents, when exceeding 5.0%, result in lower ductility, so that each of these contents should be up to 5.0%, more preferably up to 3.0%. The effect of Mo and W increases when Nb is present conjointly threrewith. When the combined amount of Nb, Mo and W exceeds 5.0% in this case, lowered ductility will result as when an excess of Nb is singly present. Accordingly the amount of such an element, or the combined amount of these elements must be up to 5.0%.

The reactor tube of the present invention is prepared preferably by centrifugal casting. For example, when the reactor tube to be cast has a double-layer structure, the tube is prepared by pouring into a centriifugal casting mold a melt of heat-resistant Fe-Cr-Ni steel of high Ni content for forming an outer layer to cast the outer layer first with a desired thickness, pouring a melt of Fe-Cr-Mn-Al steel or of Fe-Cr-Mn-Al-Ni steel with an Ni content of up to 10.0% immediately after the outer layer has solidified to its inner surface to cast an inner layer of desired thickness, and further holding the mold in rotation until the inner layer completely solidifies. Consequently, the inner and outer layers are metallurgically joined together with a thin fusion layer formed at the interface therebetween, giving a reactor tube of double-layer structure.

Example

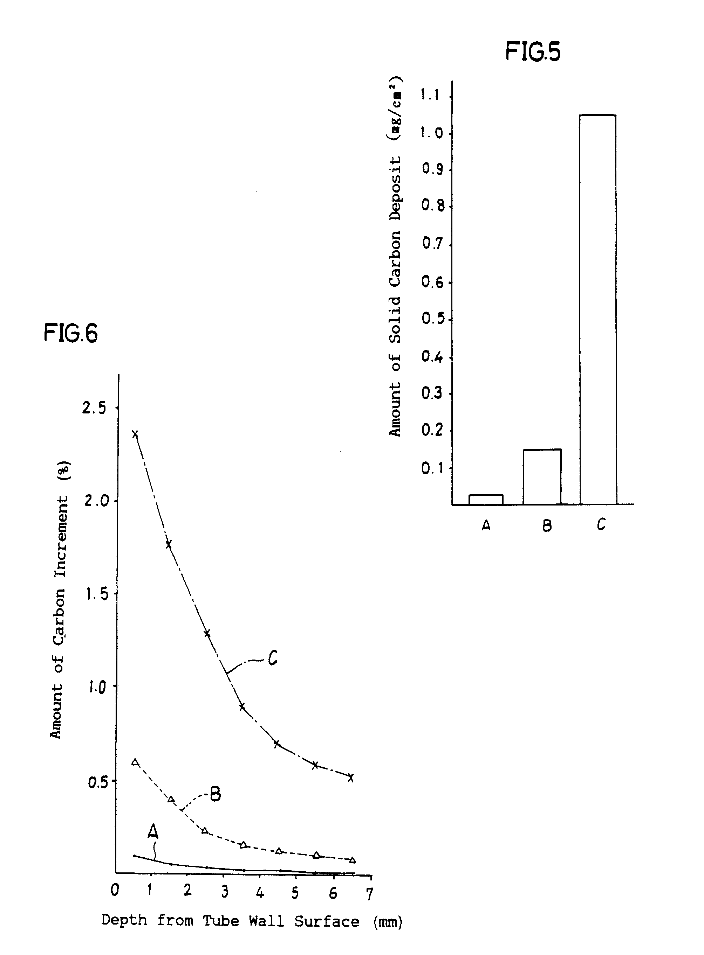

Three kinds of reactor tubes A, B and C were prepared by centrifugal casting as described below. These reactor tubes A, B and C were subjected to a coking test to obtain the results shown in Fig. 5, and also to a carburization test to obtain the results given in Fig. 6.

I . Test reactor tubes

The reactor tube A has a double-layer structure and comprises an inner layer of heat-resistant low-nickel Fe-Cr-Mn-Al-Ni streel (i) and an outer layer of heat-resistant high-nickel Fe-Cr-Ni steel (iii), according to the invention. The compositions of these steels are given below. The inner layer has thickness of 2mm, and the outer layer a thickness of 10mm.

The reactor tube B, prepared for comparison, has a doulbe-layer structure and comprises an inner layer (free from Al) of heat-resistant low-nickel Fe-Cr-Mn-Ni steel (ii) given below and an outer layer of heat resistant high-nickel Fe-Cr-Ni steel (iii). Each of the inner and outer layers has the same thickness as in the reactor tube A.

The reactor tube C, corresponding to a conventional product, has a single layer of heat-resistant high-nickel Fe-Cr-Ni steel (iii) 12 mm in thickness.

* Heat-resistant steel (i)
0.6% C, 2.0% Si, 8.0% Mn, 25.0% Cr, 0.5% Al, 0.05% N, 5.0% Ni, and the balance Fe and inevitable impurities.

* Heat-resistant steel (ii)
0.6% C, 2.0% Si, 8.0% Mn, 25.0% Cr, 5.0% Ni, and the balance Fe and inevitable impurities.

* Heat-resistant steel (iii)
0.45% C, 1.5% Si, 1.0% Mn, 25.0% Cr, 35.0% Ni, 0.05% N, and the balance Fe and inevitable impurities.

II . Coking Test

The reactor tube was tested under the reaction condition as follows: Supply of ethane; 400 cc/mm, S/C = 1.5 (S = steam, mol $H_2O$, C = carbon, atomic carbon), Temperature; 900 $^\circ$ C. The amount of carbon deposition on the inner surface of the tube was measured and shown in Fig. 5, wherein A, B and C represent the measurements obtained for the reactor tubes A, B and C, respectively.

Fig. 5 reveals that the amount of carbon deposition on the inner tube surface is exceedingly smaller in the reactor tube A of the present invention wherein the inner layer is made of hear-resistant low-nickel Fe-Cr-Mn-Al-Ni steel than in the conventional tube C which is made of a conventional material, i.e. heat-resistant Fe-Cr-Ni steel, thus substantiating an outstunding anti-coking property. The result achieved by the reactor tube A further indicates that the effect to inhibit deposition of solid carbon is in no way diminished by the presence of large amounts of Mn and specific amount of Al in the low-nickel Fe-Cr-Ni steel wherein the Ni is limited to the content not higher than 10%.

III . Carburization test

The amount of carburization of the reactor tube was measured after maintaining the tube in a solid carburizing agent (Commercial Name; Durferrit Carburizing Granulate KG 30, containing $BaCo_3$) at a temperature of 1150 $^\circ$ C for 300 hours.

Fig. 6 shows that with respect to the increase in the amount of carbon, the reactor tube C comprising a single layer of high-nickel Fe-Cr-Ni steel which is low in Mn content and free from Al is as large as 2.4% at the surface of the inner layer and is 0.5% at a depth of 3.5 *mm* from this surface. In contrast, the amount of carburization of the ractor tube A of the present invention is as small as only 0.10% even at the surface of the inner layer. The reactor tube B, although improved over the reactor tube C in resistance to carburization, undergoes more than 0.5% of carburization at the surface of the inner layer and is inferior to the reactor tube A of the present invention since the tube B is free from Al.

The reactor tube of the present invention is provided on the side thereof to be exposed to hydrocarbons with a layer of heat-resistant Fe-Cr-Mn-Al or low-nickel Fe-Cr-Mn-Al-Ni steel, which effectively inhibits deposition of solid carbon on the tube wall surface and prevents carburization thereof due to the chemical reaction. Further this layer is integrally covered with a layer of heat-resistant austenitic high-nickel Fe-Cr-Ni steel, which imparts to the tube high-temperature characteristics to fully withstand high temperatures of at least 500°C and pressures over the atmospheric pressure. Accordingly, the reactor tube of the present invention is usable under such high-temperature and high-pressure conditions for thermally cracking a hydrocarbon, as used singly or as mixed with water vapor, oxygen-containing gas or the like, into low-molecular-weight carbides or the like, or for preparing a gas mixture containing hydrogen, carbon oxide or the like. Such operation can be carried out over a prolonged period of time with good stability, free of troubles due to the deposition of solid carbon or without deterioration or degradation of the tube material due to carburization.

## Claims

1. A reactor tube for thermally cracking or reforming a hydrocarbon comprising a first wall layer to be brought into contact with the hydrocarbon and a second wall layer to be out of contact with the hydrocarbon, the first wall layer and the second wall layer being fused to each other at the interface therebetween,
the first wall layer being made of a material consisting essentially of the following components in the following proportions in terms of % by weight,
0.3 to 1.5% of C,
over 0 to not more than 3.0% of Si,
6.0 to 15.0% of Mn,
13.0 to 30.0% of Cr,
0.1 to 2.0% of Al,
over 0 to not more than 0.15% of N, and
the balance Fe and inevitable impurities,
the second wall layer being made of a material consisting essentially of the following proportions in terms of % by weight,
0.01 to 0.6% of C,
over 0 to not more than 2.5% of Si,
over 0 to not more than 2.0% of Mn,
20.0 to 30.0% of Cr,
18.0 to 40.0% of Ni,
over 0 to not more than 0.15% of N, and
the balance Fe and inevitable impurities.

2. A reactor tube as defined in claim 1 wherein the material of the first wall layer contains over 0 to not more than 1.0% of Nb.

3. A reactor tube as defined in claim 1 or 2 wherein the material of the first wall layer contains up to 10.0% of Ni.

4. A reactor tube as defined in any one of claims 1 to 3 wherein the material of the second wall layer contains at least one element selected from the group consisting of Mo, W and Nb in a combined amount of up to 5.0%.

5. A reactor tube as defined in any one of claims 1 to 4 wherein the content of Al is at least 0.1% and less than 1.0%.

6. A reactor tube as defined in any one of claims 1 to 4 wherein the content of Al is at least 0.5% and less than 1.0%.

7. A reactor tube as defined in any one of claims 1 to 6 wherein the first wall layer is formed on the inner side of the tube, and the second wall layer is formed on the outer side thereof.

8. A reactor tube as defined in any one of claims 1 to 6 wherein the first wall layer is formed on the outer side of the tube, and the second wall layer is formed on the inner side thereof.

9. A reactor tube as defined in any one of claims 1 to 6 wherein the first wall layer is formed on each of the inner and outer sides of the tube, and the second wall layer is formed between the inner and outer first wall layers.

## Revendications

1. Tube de réacteur pour le craquage thermique ou le réformage d'hydrocarbures, comprenant une première couche de paroi destinée à être mise en contact avec l'hydrocarbure et une seconde couche de paroi destinée à rester hors de contact avec l'hydrocarbure, la première couche de paroi et la seconde couche de paroi étant fusionnées l'une à l'autre au niveau de leur interface,

la première couche de paroi étant faite d'un matériau constitué essentiellement des composants suivants, dans les proportions suivantes en termes de pourcentages pondéraux,

0,3 à 1,5 % de C,

plus de 0 à pas plus de 3,0 % de Si,

6,0 à 15,0 % de Mn,

13,0 à 30,0 % de Cr,

0,1 à 2,0 % de Al,

plus de 0 à pas plus de 0,15 % de N, et

le complément étant du fer et les impuretés inévitables,

la seconde couche de paroi étant faite d'un matériau constitué essentiellement des composants suivants en les proportions suivantes, exprimées en pourcentages pondéraux,

0,01 à 0,6 % de C

plus de 0 à pas plus de 2,5 % de Si,

plus de 0 à pas plus de 2,0 % de Mn,

20,0 à 30,0 % de Cr,

18,0 à 40,0 % de Ni,

plus de 0 à pas plus de 0,15 % de N, et

le complément étant du fer et les impuretés inévitables.

2. Tube de réacteur tel que défini dans la revendication 1, dans lequel le matériau de la première couche de paroi contient plus de 0 à pas plus de 1,0 % de Nb.

3. Tube de réacteur tel que défini dans la revendication 1 ou 2, dans lequel le matériau de la première couche de paroi contient jusqu'à 10,0 % de Ni.

4. Tube de réacteur tel que défini dans l'une quelconque des revendications 1 à 3, dans lequel le matériau de la seconde couche de paroi contient au moins un élément choisi dans le groupe constitué par Mo, W et Nb, en une quantité combinée allant jusqu'à 5,0 %.

5. Tube de réacteur tel que défini dans l'une quelconque des revendications 1 à 4, dans lequel la teneur en Al vaut au moins 0,1 % et moins de 1,0 %.

6. Tube de réacteur tel que défini dans l'une quelconque des revendications 1 à 4, dans lequel la teneur en Al vaut au moins 0,5 % et moins de 1,0 %.

7. Tube de réacteur tel que défini dans l'une quelconque des revendications 1 à 6, dans lequel la première couche de paroi est formée sur le côté intérieur du tube, et la seconde couche de paroi est formée sur son côté extérieur.

8. Tube de réacteur tel que défini dans l'une quelconque des revendications 1 à 6, dans lequel la première couche de paroi est formée sur le côté extérieur du tube, et la seconde couche de paroi est formée sur son côté intérieur.

9. Tube de réacteur tel que défini dans l'une quelconque des revendications 1 à 6, dans lequel la première couche de paroi est formée sur chacun des côtés extérieur et intérieur du tube et la seconde couche de paroi est formée entre les premières couches de paroi extérieure et intérieure.

## Ansprüche

1. Reaktorrohr zum thermischen Cracken oder Reformieren von Kohlenwasserstoffen, welches eine mit den Kohlenwasserstoffen in Kontakt zu bringende erste Wandschicht und eine nicht mit den Kohlenwasserstoffen in Kontakt stehende zweite Wandschicht aufweist, und die erste Wandschicht und die zweite Wandschicht an der dazwischenliegenden Grenzschicht miteinander verschmolzen sind,

wobei die erste Wandschicht aus einem Material hergestellt ist, das im wesentlichen aus folgenden Bestandteilen in folgenden Mengen jeweils in Gew.-% besteht:

0,3 bis 1,5% C,

mehr als 0 bis nicht mehr als 3,0% Si,

6,0 bis 15,0% Mn,

13,0 bis 30,0% Cr,

0,1 bis 2,0% Al,

mehr als 0 bis nicht mehr als 0,15% N und

Rest Fe und unvermeidbare Verunreinigungen, und

die zweite Wandschicht aus einem Material hergestellt ist, das im wesentlichen aus folgenden Bestandteilen in folgenden Mengen jeweils in Gew.-% besteht:

0,01 bis 0,6% C,

mehr als O bis nicht mehr als 2,5% Si,

mehr als 0 bis nicht mehr als 2,0% Mn,

20,0 bis 30,0% Cr,

18,0 bis 40,0% Ni,

mehr als 0 bis nicht mehr als 0,15% N und

Rest Fe und unvermeidbare Verunreinigungen.

2. Reaktorrohr nach Anspruch 1, worin das Material der ersten Wandschicht mehr als 0 bis nicht mehr als 1,0% Nb enthält.

3. Reaktorrohr nach Anspruch 1 oder 2, worin das Material der ersten Wandschicht bis zu 10,0% Ni enthält.

4. Reaktorrohr nach einem der Ansprüche 1 bis 3, worin das Material der zweiten Wandschicht mindestens ein Element der Mo, W und Nb umfassenden Gruppe in einer Gesamtmenge Menge bis zu 5,0% enthält.

5. Reaktorrohr nach einem der Ansprüche 1 bis 4, worin der Gehalt an Al mindestens 0,1% und weniger als 1,0% beträgt.

6. Reaktorrohr nach einem der Ansprüche 1 bis 4, worin der Gehalt an Al mindestens 0,5% und weniger als 1,0% beträgt.

7. Reaktorrohr nach einem der Ansprüche 1 bis 6, worin die erste Wandschicht auf der Innenseite des Rohrs und die zweite Wandschicht auf seiner Außenseite ausgebildet sind.

8. Reaktorrohr nach einem der Ansprüche 1 bis 6, worin die erste Wandschicht auf der Außenseite des Rohrs und die zweite Wandschicht auf seiner Innenseite ausgebildet sind.

9. Reaktorrohr nach einem der Ansprüche 1 bis 6, worin die erste Wandschicht jeweils auf der Innen- und Außenseite des Rohrs ausgebildet ist und die zweite Wandschicht zwischen der inneren und äußeren ersten Wandschicht ausgebildet ist.

FIG.1

FIG.2

FIG.3

FIG.4

FIG.5

FIG.6